Europäisches Patentamt

European Patent Office

Office européen des brevets

(19)

(11) Publication number: **0 433 058 A2**

(12) **EUROPEAN PATENT APPLICATION**

(21) Application number: 90313548.1

(51) Int. Cl.5: **B60R 22/36**

(22) Date of filing: **13.12.90**

(30) Priority: 15.12.89 JP 144542/89 U
15.12.89 JP 144543/89 U

(43) Date of publication of application:
**19.06.91 Bulletin 91/25**

(84) Designated Contracting States:
**DE ES FR GB IT SE**

(71) Applicant: **FUJI-AUTOLIB COMPANY, LIMITED**
**1461, Ebijima, Ryuyo-cho**
**Iwata-gun, Shizuoka-ken(JP)**

(72) Inventor: **Murata, Masanori, c/o Fuji-Autolib**
**Company Ltd.**
1461, Ebijima, Ryuyo-cho
Iwata-gun, Shizuoka-ken(JP)
Inventor: **Sugano, Shuichi, c/o Fuji-Autolib**
**Company Ltd.**
1461, Ebijima, Ryuyo-cho
Iwata-gun, Shizuoka-ken(JP)
Inventor: **Nojima, Shoichi, c/o Fuji-Autolib**
**Company Ltd.**
1461, Ebijima, Ryuyo-cho
Iwata-gun, Shizuoka-ken(JP)

(74) Representative: **Senior, Alan Murray et al**
**J.A. KEMP & CO., 14 South Square Gray's Inn**
**London WC1R 5LX(GB)**

(54) **Emergency locking retractor for automotive seat belt arrangement.**

(57) An emergency locking retractor for an automotive seat belt arrangement includes a pivotable plate housed within a retractor housing and pivotably supported thereon, and a pivotable tooth member pivotably supported on the retractor housing. The pivotable plate is biased by means of a coil spring so that the free end thereof comes into contact with a webbing wound onto a belt spool. The pivotal tooth member is connected to the pivotable plate by means of a coil spring so that the pivotable tooth member pivots depending upon pivotal movement of the pivotable plate. If essentially the full length of the webbing is drawn out of the retractor housing when the seat belt arrangement is used for fixing a child seat to a vehicular seat, the free end of the pivotable tooth member engages one of teeth formed on the circumferential wall of a cam wheel which normally rotates with the belt spool in a drawn direction in which the webbing is drawn out of the retractor housing. While the child seat is fixed to the vehicular seat by means of the seat belt arrangement, the free end of the pivotable tooth member remains engaging the one of the teeth independently of operations of a webbing sensor and a vehicular sensor, so as to prevent the webbing from being drawn out of the retractor housing.

FIG.1

EP 0 433 058 A2

## EMERGENCY LOCKING RETRACTOR FOR AUTOMOTIVE SEAT BELT ARRANGEMENT

The present invention relates generally to an emergency locking retractor for an automotive seat belt arrangement. More specifically, the invention relates to an emergency locking retractor for an automotive seat belt arrangement which can not only be used for restricting a passenger on a vehicular seat, but can be also used for fixing a child seat to the vehicular seat.

Generally, an emergency locking retractor (ELR) for automotive seat belt arrangement is provided with a locking mechanism for preventing a belt from being drawn out when the vehicle receives shock. Such a locking mechanism includes a webbing sensor which operates when the belt is rapidly drawn out of the retractor, and a vehicle sensor which operates when the vehicle is rapidly accelerated or decelerated. When at least one of these sensors operates, the retractor prevents the belt from being drawn out. On the other hand, when these sensors does not operate, the belt is free to be drawn out of the retractor by the passenger, and to be rewound or retracted onto the retractor by means of a coil spring.

When a child seat is fixed to the vehicle seat by means of such a seat belt arrangement, the child seat may move from its predetermined position on the vehicle seat due to the movement of a child in the child seat, so that the belt is drawn out of the retractor and loosens. Thus, the child seat may move from its intended fixed position relative the vehicle seat.

In order to securely fix a child seat to a vehicular seat at a predetermined position even if a child in the child seat moves, some improved retractors have been proposed. In a case where a child seat is fixed to a vehicular seat by using one of such improved retractors, the full length of the belt is drawn out of the retractor before the child seat is arranged on the vehicular seat. After the child seat is arranged on the vehicular seat, extra length of the belt is rewound onto the retractor so that the child seat is surely fixed to the vehicular seat. Thereafter, the retractor is designed to prevent the belt from being drawn out by means of a locking mechanism, so that the child seat can not be moved even if a child in the child seat moves. That is, when the seat belt arrangement with this type of retractor is used for fixing the child seat to the vehicular seat, if the belt is fully drawn out of the retractor, the retractor can prevent the belt from being drawn out independently of operations of the webbing sensor and the vehicle sensor. On the other hand, in the usual use, i.e. when the seat belt arrangement is used for restricting passenger on the vehicular seat, the belt is prevented from being drawn out by means of the locking mechanism only when at least one of the sensors operates. In this way, in order to distinguish the usual use from the specific use for fixing the child seat to the vehicular seat, full length of the belt must be previously drawn out of the retractor when the seat belt arrangement is used for fixing the child seat to the vehicular seat.

However, the aforementioned conventional emergency locking retractors must be provided with a specific gear mechanism for preventing the belt from being drawn out when it is used for fixing the child seat to the vehicular seat. As a result, there is disadvantages in that construction of the retractor becomes complicated, and that size and cost of the retractor increases.

It is therefore an aim of the present invention to provide an improved emergency locking retractor for an automotive seat belt arrangement which can not only be used for restricting a passenger on a vehicular seat, but can be also used for fixing a child seat to the vehicular seat.

It is another aim of the present invention to provide a simple, compact and inexpensive emergency locking retractor which has the aforementioned functions.

According to the present invention there is provided an emergency locking retractor for a vehicular seat belt arrangement comprising:

a retractor housing;

a belt spool housed within the retractor housing and rotatably supported therein to receive webbing wound thereon;

a first rotatable member rotatably supported on one end of the belt spool to rotate therewith in a drawing direction in which the webbing is drawn out of the retractor housing, and having a plurality of teeth;

means for preventing rotation of said rotatable member in the event that the vehicle receives a shock;

a pivotable plate housed within said retractor housing and pivotably supported therein, said pivotable member being biased toward the belt spool; and

a pivotable tooth member pivotably supported on said retractor housing and being pivotable depending upon pivotal movement of said pivotable plate, the free end of the pivotable tooth member engaging one of said teeth of the first rotatable member for preventing the first rotatable member from rotating in said drawn direction irrespective of the operation of said first and second sensor means when substantially the full length of the webbing is drawn out of the retractor housing, said free end of the pivotable tooth member disengaging from said one of the teeth when a predetermined length of the webbing is rewound onto the belt spool.

In some embodiments of the invention an emergency locking retractor for an automotive seat belt arrangement includes a pivotable plate housed within a retractor housing and pivotably supported thereon, and a pivotable tooth member pivotably supported on the retractor housing. The pivotable plate is biased by means of a spring so that the free end thereof comes into contact with a webbing wound onto a belt spool. The pivotal tooth member is connected to the pivotable plate by means of a coil spring so that the pivotable tooth member pivots depending upon pivotal movement of the pivotable plate. If substantially the full length of the webbing is drawn out of the retractor housing when the seat belt arrangement is used for fixing a child seat to a vehicular seat, the free end of the pivotable tooth member engages one of the teeth formed on the circumferential wall of a cam wheel which normally rotates with the belt spool in a drawn direction in which the webbing is drawn out of the retractor housing. While the child seat is fixed to the vehicular seat by means of the seat belt arrangement, the free end of the pivotable tooth member remains engaged in the one of the teeth independently of the operation of the webbing sensor on the vehicular sensor, so as to prevent the webbing from being drawn out of the retractor housing.

The present invention will be understood more fully from the detailed description of the exemplary embodiments given below and from the accompanying drawings, in which:

Fig. 1 is an exploded, perspective view of the first preferred embodiment of an emergency locking retractor for an automotive seat belt arrangement, according to the present invention;

Fig. 2 is a perspective view of a cam wheel of the emergency locking retractor of Fig. 1, which shows the rear side of the cam wheel;

Fig. 3 is a schematic view of the emergency locking retractor of Fig. 1, which is explanatory of the operation of the emergency locking retractor;

Fig. 4 is an exploded, perspective view of the second preferred embodiment of an emergency locking retractor for an automotive seat belt arrangement, according to the present invention;

Fig. 5 is a schematic view of the emergency locking retractor of Fig. 4, which is explanatory of the operation of the emergency locking retractor;

Fig. 6 is an exploded, perspective view of the third preferred embodiment of an emergency locking retractor for an automotive seat belt arrangement, according to the present invention;

Fig. 7 is a side elevation of a pivotable plate of the emergency locking retractor of Fig. 7;

Fig. 8 is a plan view of the pivotable plate of Fig. 7; and

Figs. 9 through 11 are schematic views of the emergency locking retractor of Fig. 6, which are explanatory of the operation of the emergency locking retractor.

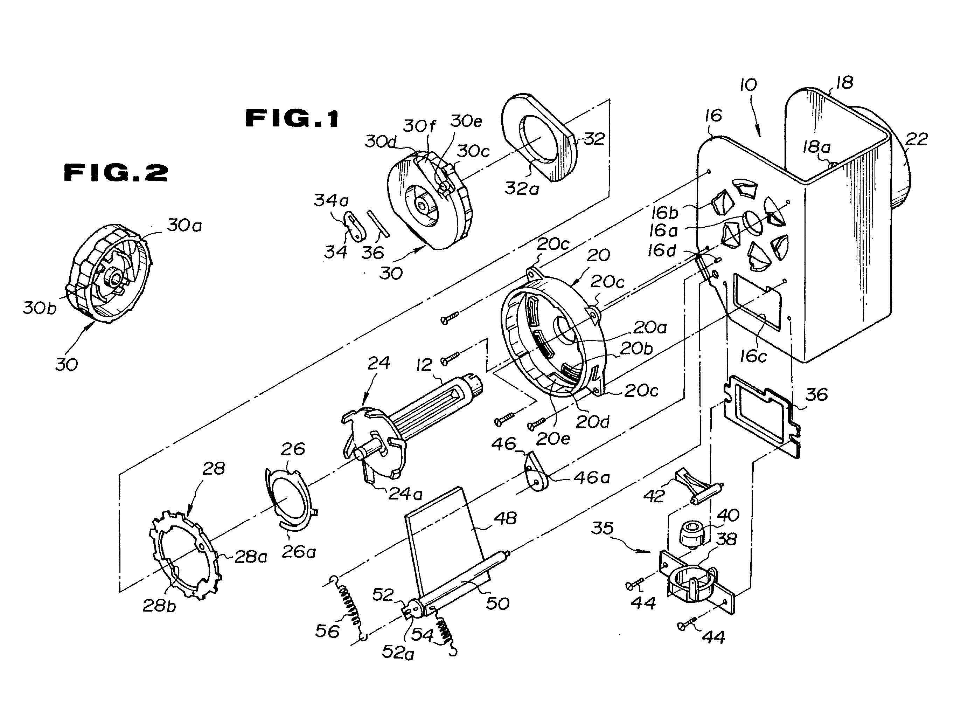

Referring now to the drawings, particularly to Figs. 1 through 3, there is shown the first preferred embodiment of an emergency locking retractor for an automotive seat belt arrangement, according to the present invention.

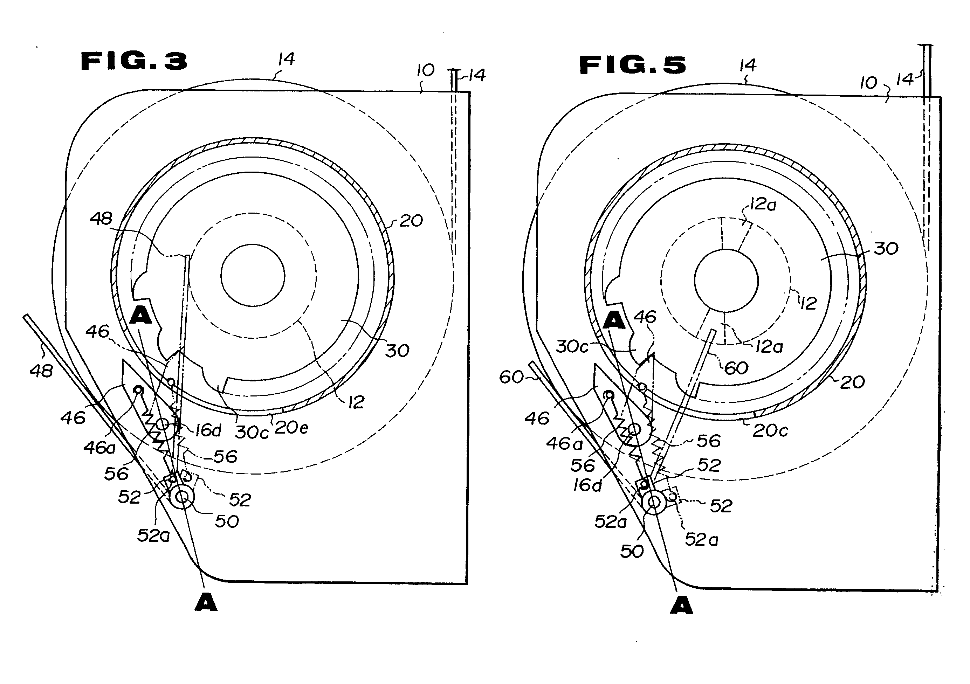

As shown in Fig. 1, the emergency locking retractor includes a retractor housing 10 for receiving therein a belt spool 12 onto which a webbing 14 is wound as shown in Fig. 3. The retractor housing 10 has a pair of side walls 16 and 18 parallel to each other. The side walls 16 and 18 are respectively formed with circular through openings 16a and 18a on which the belt spool 12 is rotatably supported. The side wall 16 also has a plurality of latching teeth 16b which are arranged symmetrically around the edge of the circular through opening 16a and which project outward and substantially perpendicular to the plane of the side wall 16.

An essentially cylindrical stationary latching case 20 is secured to the outer surface of the side wall 16 of the retractor housing 10. The stationary latching case 20 has a circular through opening 20a at the center thereof, and a plurality of slots 20b symmetrically around the circular through opening 20a. The stationary latching case 20 also has a plurality of mounting portions 20c which project radially from the outer periphery thereof. When the stationary latching case 20 is mounted on the side wall 16 of the retractor housing 10 by fixing the mounting portions 20c to the side wall 16 by means of screws, the circular through opening 16a faces the circular through opening 20a, and the latching teeth 16b pass through the slots 20b. In addition, the stationary latching case 20 has a plurality of ratchet teeth 20d on the internal periphery thereof.

On the other hand, a spring case 22 is secured to the outer surface of the side wall 18 of the retractor housing 10. The spring case 22 houses therein a spring (not shown) which engages one end of the belt spool 12 to bias the belt spool 12 in the retraction direction in which the webbing 14 is wound onto the belt spool 12.

A locking disc 24 is secured to the other end portion of the belt spool 12 so as to rotate therewith, and is housed within the stationary latching case 20. A plurality of locking claws 24a project from the circumferential edge of the locking disc 24, and are arranged symmetrically in a radial direction of the locking disc 24. The locking claws 24a extend essentially perpendicular to the plane of the locking disc 24, but are oblique to the axis of the belt spool 12.

An essentially disc-shaped leaf spring 26 is arranged on the outer surface of the locking disc 24 within a space defined by the locking claws 24a. The leaf spring 26 has resilient strips 26a which extend in an essentially circumferential and slightly oblique direction. The resilient strips 26a are adapted to bias a substantially annular locking wheel 28 in a direction away from the locking disc 24.

The locking wheel 28 has outer locking teeth 28a which project radially outward from the outer periphery thereof, and inner locking teeth 28b which project radially inward from the inner periphery thereof. Each of adjacent pairs of the outer locking teeth 28a are arranged within a space defined between the adjacent locking claws 24a so as to be engageable with the locking claws 24a of the locking disc 24 and with the latching teeth 16b of the retractor housing 10.

The locking wheel 28 is received in a cam wheel 30. As shown in Fig. 2, the cam wheel 30 has an inner annular wall 30a which projects axially inwards. The inner annular wall 30a has four notches 30b which are engageable with the inner locking teeth 28b of the locking wheel 28 so that the cam wheel 30 normally rotates with the locking wheel 28.

The cam wheel 30 also receives therein an inertia responsive flywheel 32 between the inner surface of the cam wheel 30 and the locking wheel 28. The flywheel 32 is made from an essentially ellipse metal, and has an essentially circular through opening 32a through which the inner annular wall 30a pass. The flywheel 32 is designed to be normally rotatable with the cam wheel 30 in accordance with rotation of the belt spool 12.

In addition, the cam wheel 30 has a plurality of ratchet teeth 30c on the axial half of the outer periphery thereof. On the other axial half of the outer periphery of the cam wheel 30, a recess 30d is formed. The recess 30d is formed with a cylindrical pivot 30e which projects axially. A webbing sensor pawl 34 is pivotably supported on the pivot 30e of the cam wheel 30, and is biased toward its unlocking position, in which essentially entire portion of the webbing sensor pawl 34 is received within the recess 30d, by means of a leaf spring 36. The webbing sensor pawl 34 has a projection 34a at the free end portion thereof. By biasing force of the leaf spring 34b, the projection 34a of the webbing sensor pawl 34 is designed to be in contact with the flywheel 32 through a through opening 30f formed in the recess 30d, by biasing force of the leaf spring 34b. When the flywheel 32 is displaced relative to the cam wheel 30, a part of the flywheel 32 is designed to pass through the through opening 30f to cause the webbing sensor pawl 34 to move to a locking position in which the webbing sensor pawl 34 engages one of the ratchet teeth 20d of the stationary latching case 20, so as to prevent the cam wheel 30 from rotating relative to the stationary latching case 20.

A vehicle sensor 35 is also mounted on the outer surface of the side wall 16 of the retractor housing 10 via a frame 36. The frame 36 has a through opening which essentially coincides with a through opening 16c formed in the side wall 16. The vehicle sensor 35 comprises a weight retainer 38, an inertia-sensitive weight 40 and a vehicle sensor pawl 42. The weight retainer 38 is fixed to the side wall 16 of the retractor housing 10 via the frame 36 by means of screws 44. The inertia-sensitive weight 40 is received within the weight retainer 38. The vehicle sensor pawl 42 is pivotably supported on the weight retainer 38, and is normally in contact with the upper surface of the inertia-sensitive weight 40. As is well known, the inertia-sensitive weight 40 is designed to tilt in response to excessive inertial moments to displace the vehicle sensor pawl 40 upwards. In the displaced position, the free end of the vehicle sensor pawl 42 passes through a through opening 20e formed in the circumferential wall of the stationary latching case 20 to engage one of the ratchet teeth 30c so as to prevent the cam wheel 30 from rotating relative to the stationary latching case 20.

According to the present invention, in order that the locking mechanism can also prevent the belt from being drawn out of the retractor when the retractor is used for fixing a child seat to the vehicular seat, the locking mechanism cooperates with a locking assembly which prevents the cam wheel from rotating independently of the webbing sensor and the vehicle sensor. In this embodiment, the locking assembly comprises a tooth 46, a pivotable plate 48, a pivotal shaft 50. a lever 52 and coil springs 54 and 56. The tooth 46 is pivotably supported on a cylindrical projection 16d which is projects from the outer surface of the side wall 16 of the retractor housing 10. The free end of the tooth 46 can pass through the through opening 20e to be engageable with the ratchet teeth 30c. Both ends of the pivotal shaft 50 is pivotably supported on the side walls 16 and 18 of the retractor housing 10. The pivotable plate 48 is housed within the retractor housing 10, and the base end portion thereof is fixed to the pivotal shaft 50 so that the pivotable plate 48 is pivotably supported on the side walls 16 and 18. The pivotable plate 48 is connected to one end of the spring 54, the other end of which is connected to the retractor housing 10, so as to be biased toward the belt spool 12 by means of the spring 54. The lever 52 is pivotably supported on one end of the pivotal shaft 50 which projects from the side wall 16. The other spring 56 is connected between projections 52a and 46a which project from the free ends of the lever 52 and the tooth 46. Referring to Fig. 3, there is shown the line A-A, which is drawn between the central points of the projection 46a of the tooth 46, the projection 16d of the side wall 16 and the pivotal shaft 50 when all the central points are in align with each other. This line A-A acts as a dead line of the locking mechanism. When the spring 56 moves to the right of the line A-A in Fig. 3, the tooth 46 is designed to engage one of the ratchet teeth 30c, and when the spring 56 moves to the left of the line A-A, the tooth 46 is designed to disengage from the ratchet teeth 30c.

The operation of the first preferred embodiment of an emergency locking retractor for an automotive seat belt arrangement, according to the present invention, is described below.

In a case where the emergency locking retractor is used for fixing a child seat to the vehicular seat, the full length of the webbing 14 is slowly drawn out of the retractor housing 10 so as not to cause the webbing sensor to operate. As shown in Fig. 3, when the diameter of the webbing 14 wound onto the belt spool 12 decreases by drawing the webbing 14 out of the retractor housing 10, the pivotable plate 48 pivots toward the axis of the belt spool 12 since the pivotable plate 48 is biased against the webbing 14 wound onto the belt spool 12. In accordance with the pivotal movement of the pivotable plate 48, the pivotal shaft 50 and the lever 52 pivot, so that the spring 56 exceeds the dead point (line A-A). As a result, the tooth 46 pivots to the right of the line A-A, so that the tooth 46 becomes to be engageable with one of the ratchet teeth 30c. In this position, a child seat is arranged on the vehicular seat, and then the belt is passed over the child seat or through a groove formed therein. After a tang connected to the webbing 14 is inserted into a buckle fixed to the vehicular body to be engaged therewith, extra length of the webbing 14 is rewound onto the belt spool 12 by the spring force of the coil spring. In this case, the tooth 46 can pass over the ratchet teeth 30c while it comes into contact with one of the ratchet teeth 30c. On the other hand, this engagement of the tooth 46 with the ratchet teeth 30c is designed to prevent the cam wheel 30 from rotating to prevent the belt spool 12 from rotating in the drawn direction in which the webbing 14 is drawn out of the retractor housing 10. In this way, the child seat is fixed to the vehicle seat. While the seat belt arrangement is used for fixing the child seat to the vehicle seat, the tooth 46 can not disengage from the ratchet teeth 30c since a predetermined length of the webbing 14 is drawn out of the retractor housing 10. Therefore, even if the webbing sensor or the vehicle sensor operates when the seat belt arrangement is used for fixing the child seat to the vehicle seat, the retractor remains preventing the belt from being drawn out since the tooth 46 remains engaging one of the ratchet teeth 30c. When the tang is disengaged from the buckle, extra length of the webbing 14 is rewound onto the belt spool 12, so that the pivotable plate 48 pivots in a direction going away from the belt spool 12 to cause the pivotal shaft 50 and the lever 52 to pivot in the same direction as that of the pivotable plate 48. As a result, the spring 56 moves to the left to exceed the dead point (the line A-A), so that the tooth 46 returns its initial position.

In the case of the usual use, i.e. when the seat belt arrangement is used for restricting passenger on the vehicular seat, the full length of the webbing 14 is not required to be drawn out. Therefore, since the belt spool 12 does not pivot until the tooth 46 comes into contact with the ratchet teeth 30c, the passenger can not only freely draw a desired length of webbing 14 out of the retractor housing 10, but the extra length of webbing 14 can be also retracted by means of the retractor. In this case, when the webbing 14 is rapidly drawn out of the retractor housing 10, the flywheel 32 can not follow rotation of the cam wheel 30, i.e. the flywheel 32 rotates reversely relative to rotation of the cam wheel 30, so that the flywheel 32 thrusts the webbing sensor pawl 34 against the spring force of the leaf spring 36 to cause the webbing sensor pawl 34 to protrude from the circumferential wall of the cam wheel 30. As a result, the webbing sensor pawl 34 engages one of the ratchet teeth 20d formed in the inner periphery of the latching case 20, so as to prevent the cam wheel 30 from rotating.

Furthermore, when the vehicle is rapidly accelerated or decelerated, the inertia-sensitive weight 40 tilts so that the vehicle sensor pawl 42 pivots to engage one of the ratchet teeth 30c to prevent the cam wheel 30 from rotating. Particularly, when the vehicle is rapidly decelerated or gets a shock, tension is applied to the webbing 14 in the drawn direction due to inertial force of the passenger. Therefore, the belt spool 12, the locking disc 24 and the locking wheel 28 rotate in the drawn direction, so that the locking wheel 28 moves toward the retractor housing 10 against the spring force of the leaf spring 26 while the inner locking teeth 28b comes into contact with the notches 30b of the cam wheel 30. As a result, the base end portions of the outer locking teeth 20b engage the locking claws 24a of the locking disc 24, and the top end portion of the outer locking teeth 20b engage the latching teeth 16b of the retractor housing 10, so as to prevent the belt spool 12 from rotating in the drawn direction. In this way, the passenger can be restricted on the vehicular seat when the vehicle gets a shock.

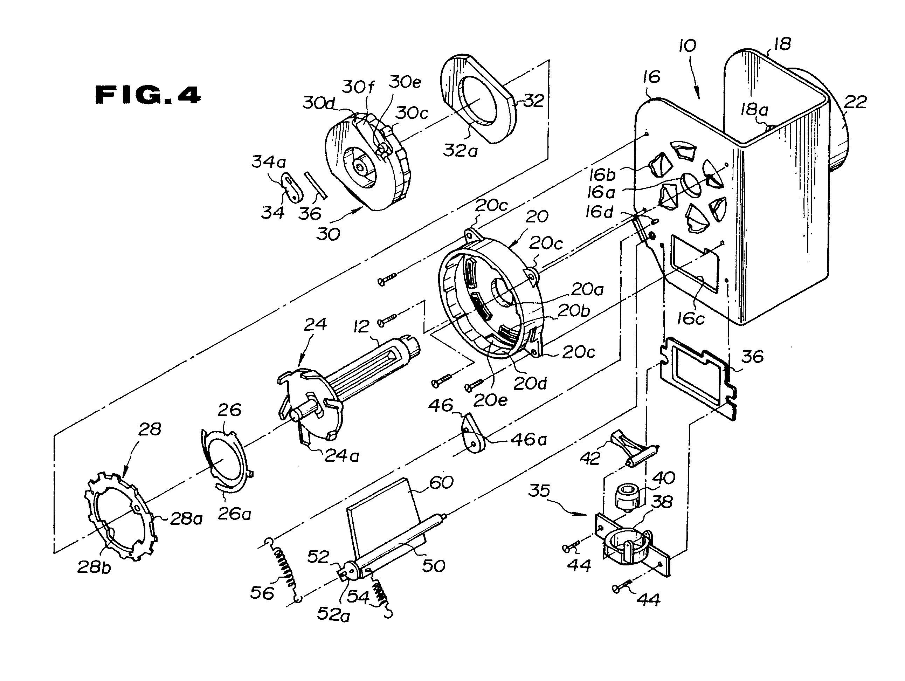

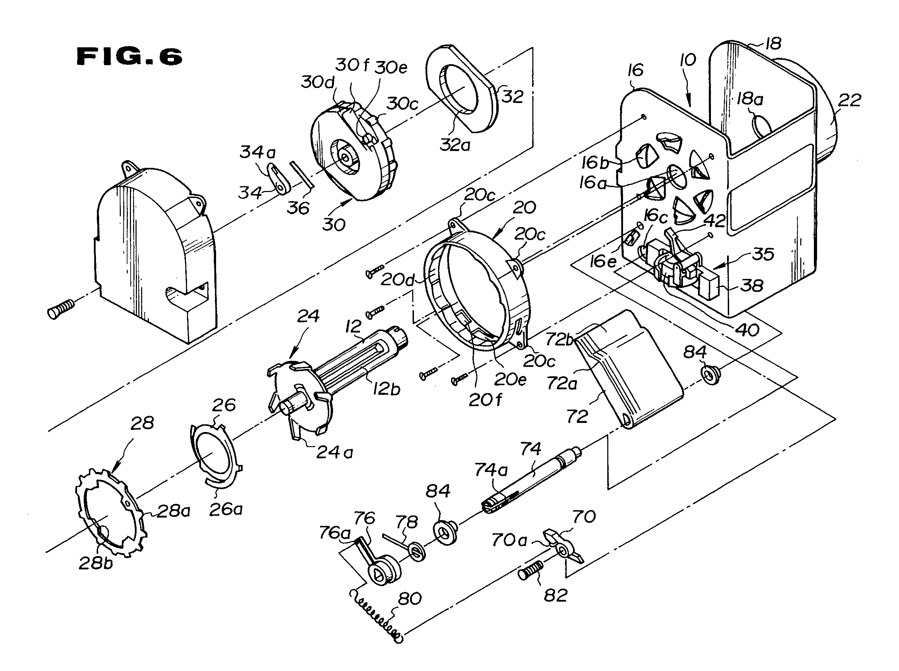

Figs. 4 and 5 show the second preferred embodiment of an emergency locking retractor, according to the present invention.

This embodiment is similar to the first preferred embodiment except that the pivotable plate 48 is replaced by a pivotable plate 60. Length of the pivotable plate 60 is shorter than that of the pivotable plate 48 of the first preferred embodiment. As can be seen clearly from Fig. 5, the free end portion of the pivotable plate 60 is designed to engage one of grooves 12a which are formed in the belt spool 12 so as to extend parallel to the axis of the belt spool 12, when full length of the webbing 14 is drawn out of the retractor.

The operation of the second preferred embodiment of an emergency locking retractor, according to the present invention, is described below.

In a case where the emergency locking retractor is used for fixing a child seat to the vehicular seat, full length of the webbing 14 is slowly drawn out of the retractor housing 10 so as not to cause the webbing sensor to operate. When the diameter of the webbing 14 wound onto the belt spool 12 decreases by drawing the webbing 14 out of the retractor housing 10, the pivotable plate 60 pivots toward the axis of the belt spool 12 since the pivotable plate 60 is biased against the webbing 14 wound onto the belt spool 12, and the free end portion of the pivotable plate 60 is inserted into one of the grooves 12a of the belt spool 12. In accordance with the pivotal movement of the pivotable plate 60, the pivotal shaft 50 and the lever 52 pivot, so that the spring 56 moves to the right to exceed the dead point (line A-A). As a result, the tooth 46 pivots to the right of the line A-A, so that the tooth 46 becomes to be engageable with one of the ratchet teeth 30c. In this position, a child seat is arranged on the vehicular seat, and then the belt is passed over the child seat or through a groove formed therein. After a tang connected to the webbing 14 is inserted into a buckle fixed to the vehicular body to be engaged therewith, extra length of the webbing 14 is rewound onto the belt spool 12 by the spring force of the coil spring. At this time, the free end portion of the pivotable plate 60 disengages from the groove 12a due to rotation of the belt spool 12. When the extra length of the webbing 14 is rewound onto the belt spool 12, the tooth 46 can pass over the ratchet teeth 30c while it comes into contact with one of the ratchet teeth 30c. On the other hand, this engagement of the tooth 46 with the ratchet teeth 30c is designed to prevent the cam wheel 30 from rotating to prevent the belt spool 12 from rotating in the drawn direction in which the webbing 14 is drawn out of the retractor housing 10. In this way, the child seat is fixed to the vehicle seat.

In this embodiment, pivotal angle of the pivotable plate 60 is greater than that of the pivotable plate 48 of the first preferred embodiment. Therefore, it is possible to surely cause the tooth 46 to engage the ratchet teeth 30c, even if the spring forces of the coil springs 54 and 56 become weak.

Figs. 6 through 11 show the third preferred embodiment of an emergency locking retractor, according to the present invention.

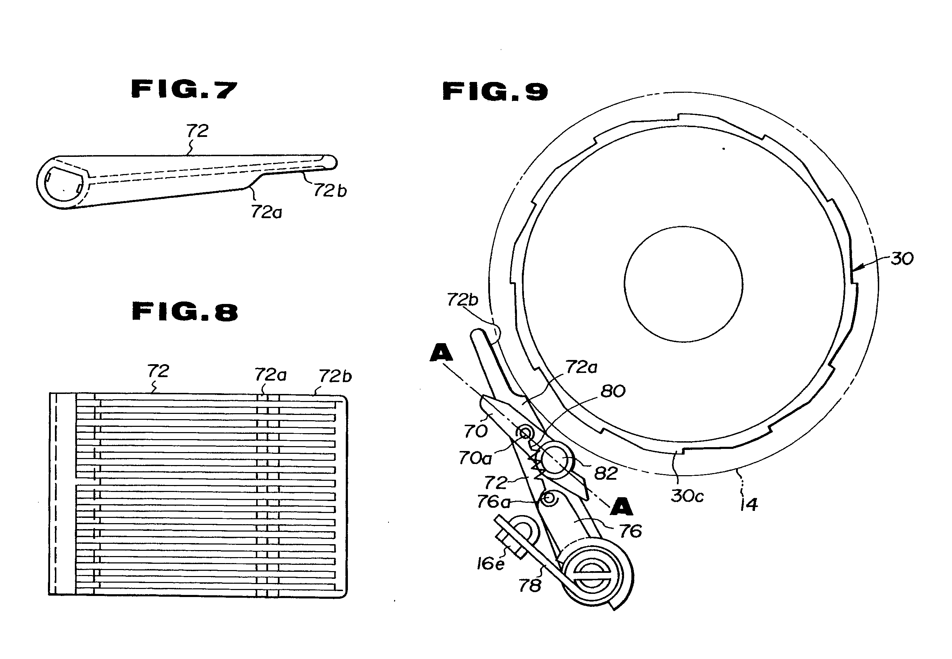

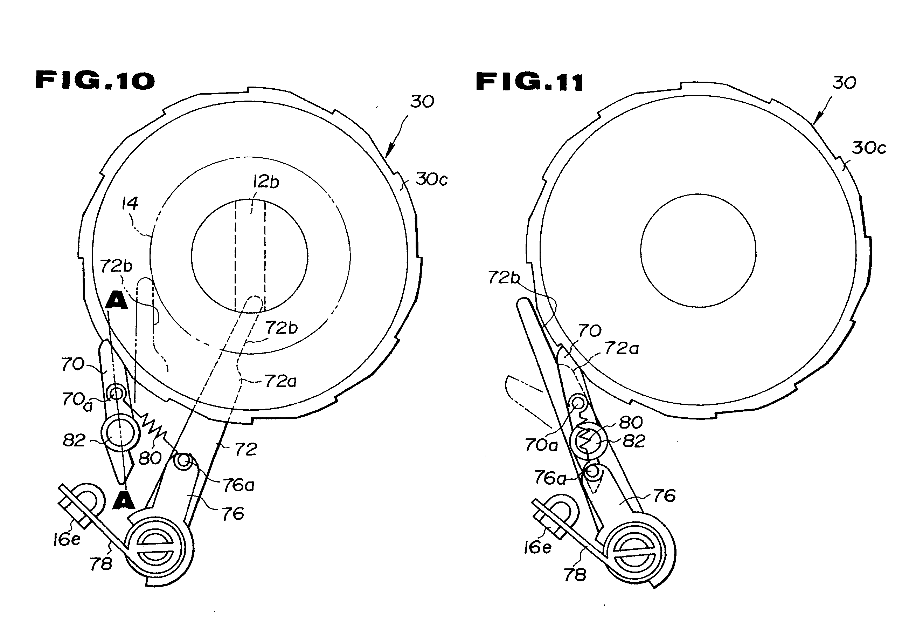

In this embodiment, the locking assembly differs from that of the first preferred embodiment. The locking assembly generally comprises a tooth 70, a pivotable plate 72, a pivotal shaft 74, a lever 76, springs 78 and 80. The tooth 70 is arranged on the outer surface of the side wall 16 of the retractor housing 10 to be pivotably supported thereon by means of a screw 82. The free end of the tooth 70 can pass through a through opening 20f formed in the circumferential wall of the stationary latching case 20 at a location neighboring the through opening 20e, to be engageable with the ratchet teeth 30c. Both ends of the pivotal shaft 74 is pivotably supported on the side walls 16 and 18 of the retractor housing 10 via bearings 84. The pivotable plate 72 is housed within the retractor housing 10, and the base end portion thereof is fixed to the pivotal shaft 74 so that the pivotable plate 72 is pivotably supported on the side walls 16 and 18. One end of the spring 78 engages a groove 74a formed in one end portion of the pivotal shaft 74. The other end of the spring 78 is fixed to an engaging portion 16e formed in the side wall 16 of the retractor housing 10. so as to bias the pivotable plate 72 toward the belt spool 12. As can be seen clearly from Fig. 10, the free end portion of the pivotable plate 72 is designed to engage a groove 12c formed in the belt spool 12, when full length of the webbing 14 is drawn out of the retractor. As shown in Figs. 7 and 8, the pivotable plate 72 has a first contact portion 72a which is arranged at a location slightly away from the free end portion of the pivotable plate 72 to come into contact with the webbing 14 wound onto the belt spool 12 when the diameter of the webbing 14 is relatively great, and a second contact portion 72b which is arranged at a location neighboring the free end portion of the pivotable plate 72 to come into contact with the webbing 14 wound onto the belt spool 12 when the diameter of the webbing 14 is relatively small. The lever 76 is pivotably supported on one end portion of the pivotal shaft 74 which projects from the side wall 16. The other spring 80 is connected between projecting pins 70a and 76a which project from the free ends of the tooth 70 and the lever 76.

The operation of the third preferred embodiment of an emergency locking retractor for an automotive seat belt arrangement, according to the present invention, is described below.

In a case where the emergency locking retractor is used for fixing a child seat to the vehicular seat, full length of the webbing 14 is slowly drawn out of the retractor housing 10 so as not to cause the webbing sensor to operate. When a great part of the webbing 14 is wound onto the belt spool 12, the pivotable plate 72 is positioned at a position shown in Fig. 9. At this position, the first contact portion of the pivotable plate 72 comes into contact with the webbing 14 wound onto the belt spool 12. As shown in Fig. 10, when the diameter of the webbing 14 wound onto the belt spool 12 decreases by drawing the webbing 14 out of the retractor housing 10, the pivotable plate 72 pivots toward the axis of the belt spool 12 since the pivotable plate 72 is biased against the webbing 14 wound onto the belt spool 12, and the free end portion of the pivotable plate 72 is inserted into the groove 12b of the belt spool 12. While the diameter of the webbing 14 wound onto the belt spool 12 decreases, contacting portion of the pivotable plate 72 with the webbing 14 is changed from the first contact portion 72a to the second contact portion 72b. In accordance with the pivotal movement of the pivotable plate 72, the pivotal shaft 74 and the lever 76 pivot, so that the spring 80 moves to the right to exceed the dead point (the line A-A). As a result, the tooth 70 pivots to the right of the line A-A, so that the tooth 70 becomes to be engageable with one of the ratchet teeth 30c. In this position, a child seat is arranged on the vehicular seat, and then the belt is passed over the child seat or through a groove formed therein. After a tang connected to the webbing 14 is inserted into a buckle fixed to the vehicular body to be engaged therewith, extra length of the webbing 14 is rewound onto the belt spool 12 by the spring force of the coil spring. At this time, the free end portion of the pivotable plate 72 disengages from the groove 12b due to rotation of the belt spool 12. When the extra length of the webbing 14 is rewound onto the belt spool 12, the tooth 70 can pass over the ratchet teeth 30c while it comes into contact with one of the ratchet teeth 30c. On the other hand, this engagement of the tooth 70 with the ratchet teeth 30c is designed to prevent the cam wheel 30 from rotating to prevent the belt spool 12 from rotating in the drawn direction in which the webbing 14 is drawn out of the retractor housing 10. In this way, the child seat is fixed to the vehicular seat.

As mentioned above, in this embodiment, contacting portion of the pivotable plate 72 with the webbing 14 is changed from the first contact portion 72a to the second contact portion 72b while the diameter of the webbing 14 wound onto the belt spool 12 decreases, so that pivotal angle of the pivotable plate 72 is greater than that of the pivotable plate 48 of the first preferred embodiment. Therefore, it is possible to surely cause the tooth 70 to engage the ratchet teeth 30c, even if the spring forces of the springs 78 and 80 become weak.

In this embodiment, the dead point (the line A-A) is normally inclined counterclockwise relative to the vertical direction as shown in Fig. 9. When full length of the webbing 14 is drawn out of the retractor housing 10, the spring 80 moves to the right to exceed the dead point, so that the free end portion of the tooth 70 engages one of the ratchet teeth 30c of the cam wheel 30. Then, the pivotable plate 72 further pivots until the free end portion of the pivotable plate 72 engages the groove 12b. In this way, the spring 80 can surely exceed the dead point, so that the free end portion of the pivotable plate 72 can surely engage the groove 12b. On the other hand, when the webbing 14 is rewound onto the belt spool 12, the direction of the dead point (the line A-A) is changed to a substantially vertical direction. Until the spring 80 moves to the right to exceed this dead line, the tooth 70 remains engaging the one of the ratchet teeth 30c so as to prevent the webbing 14 from being drawn out of the retractor housing 10. That is, by changing the position of the dead line when rewinding from that when drawing, there is a difference between the timings in that the tooth 70 engages with and disengages from the ratchet teeth 30c.

While the present invention has been disclosed in terms of the preferred embodiment in order to facilitate better understanding thereof, it should be appreciated that the invention can be embodied in various ways without departing from the scope of the invention. Therefore, the invention should be understood to include all possible embodiments and modification to the shown embodiments which can be embodied without departing from the scope of the invention as set forth in the appended claims.

## Claims

1. An emergency locking retractor for a vehicular seat belt arrangement comprising:
   a retractor housing (10);
   a belt spool (12) housed within the retractor housing and rotatably supported therein to receive webbing wound thereon;
   a first rotatable member (30) rotatably supported on one end of the belt spool to rotate therewith in a drawing direction in which the webbing is drawn out of the retractor housing, and having a plurality of teeth (30c);
   means for preventing rotation of said rotatable member in the event that the vehicle receives a shock;
   a pivotable plate (48) housed within said retractor housing and pivotably supported therein, said pivotable member being biased toward the belt spool; and

a pivotable tooth member (46) pivotably supported on said retractor housing and being pivotable depending upon pivotal movement of said pivotable plate, the free end of the pivotable tooth member engaging one of said teeth (30c) of the first rotatable member for preventing the first rotatable member from rotating in said drawn direction irrespective of the operation of said first and second sensor means when substantially the full length of the webbing is drawn out of the retractor housing, said free end of the pivotable tooth member disengaging from said one of the teeth when a predetermined length of the webbing is rewound onto the belt spool.

2. An emergency locking retractor according to claim 1, wherein said pivotable plate comes into contact with said belt spool when the full length of the webbing is drawn out of the retractor housing.

3. An emergency locking retractor according to claim 1 or 2, wherein said pivotable plate is connected to said pivotable tooth member via biasing means (56).

4. An emergency locking retractor according to claim 3, wherein said pivotable tooth member engages one of said teeth of the rotatable member due to the biasing force of said biasing means when said pivotable plate approaches said belt spool, and disengages from said one of the teeth due to the biasing force of said biasing means when said pivotable plate moves a predetermined distance away from said belt spool.

5. An emergency locking retractor according to any one of the preceding claims, wherein said belt spool has a groove into which said pivotable plate is inserted when the full length of the webbing is drawn out of the retractor housing.

6. An emergency locking retractor according to any one of the preceding claims, wherein said pivotable plate has a first contact portion at a location slightly away from the free end thereof to come into contact with the webbing wound onto the belt spool when the diameter of the webbing is relatively great, and a second contact portion at a location neighboring the free end thereof to come into contact with the webbing wound onto the belt spool when the diameter of the webbing is relatively small.

7. An emergency locking retractor according to any one of the preceding claims, further comprising:

a stationary case (20) secured to the retractor housing;

a second rotatable member (24) housed within the stationary case and secured to one end of the belt spool to rotate therewith; and

a third rotatable member (28) housed within the stationary case, said third rotatable member engaging the second rotatable member to rotate therewith in a drawing direction in which the webbing is drawn out of the retractor housing; wherein

said first rotatable member (30) is housed within the stationary case, said third rotatable member normally engaging the third rotatable member to rotate therewith.

8. An emergency locking retractor according to any one of the preceding claims, wherein said means for preventing rotation comprises first sensor means (30, 32, 34) for detecting a webbing drawing acceleration to prevent said first rotatable member from rotating in said drawing direction when the webbing is drawn out at an acceleration exceeding a predetermined value.

9. An emergency locking retractor according to any one of the preceding claims, wherein said means for preventing rotation comprises second sensor means (35) for detecting a vehicular acceleration to prevent said first rotatable member from rotating in said drawing direction when the vehicular acceleration exceeds a predetermined value.

FIG.2

FIG.1

EP 0 433 058 A2

FIG.5

FIG.3

# FIG.4

EP 0 433 058 A2

# FIG.6

EP 0 433 058 A2

# FIG.7

72

72a 72b

# FIG.8

72 72a 72b

# FIG.9

72b

A

72a

80

70

70a

82

72

76a

A

76

16e

78

30

30c

14

EP 0 433 058 A2

FIG.11

FIG.10